(19) Europäisches Patentamt
European Patent Office
Office européen des brevets

(11) **EP 0 540 866 B1**

(12) **EUROPÄISCHE PATENTSCHRIFT**

(45) Veröffentlichungstag und Bekanntmachung des Hinweises auf die Patenterteilung:
**14.08.1996 Patentblatt 1996/33**

(51) Int. Cl.⁶: **B65G 23/34**

(21) Anmeldenummer: **92115928.1**

(22) Anmeldetag: **17.09.1992**

(54) **Kettentrieb**

Chain propulsion

Propulsion par chaîne

(84) Benannte Vertragsstaaten:
**CH DE FR GB IT LI NL SE**

(30) Priorität: **06.11.1991 CH 3231/91**

(43) Veröffentlichungstag der Anmeldung:
**12.05.1993 Patentblatt 1993/19**

(73) Patentinhaber: **Ferag AG**
**CH-8340 Hinwil (CH)**

(72) Erfinder: **Infanger, Rudolf**
**CH-8340 Hinwil (CH)**

(74) Vertreter: **Frei, Alexandra Sarah**
**Frei Patentanwaltsbüro**
**Hedwigsteig 6**
**Postfach 768**
**8029 Zürich (CH)**

(56) Entgegenhaltungen:
**EP-A- 0 274 751**          **DE-A- 3 545 300**

## Beschreibung

Die Erfindung liegt auf dem Gebiete der Antriebe und betrifft einen Kettentrieb gemäss dem Oberbegriff des Patentanspruchs 1, der unter Berücksichtigung des Standes der Technik nach der EP-A-0 274 751 formuliert wurde.

Für den Transport von Druckprodukten werden vielfach angetriebene Transportketten eingesetzt, die beispielsweise an jedem Kettenglied eine steuerbare Klammer für das Erfassen und Transportieren eines Druckproduktes aufweisen. Derartige Ketten sind beispielsweise beschrieben in der Schweizer Patentschrift Nr. 588647 derselben Anmelderin. Werden nun im Bereiche einer mit einer derartigen Kette betriebenen Transportstrecke Hilfsvorrichtungen verwendet, die in einem mit dem Takt des Transportes (Druckprodukte pro Zeiteinheit) korrespondierenden Takt betrieben werden sollen, ist es vorteilhaft, diese mit Hilfe eines Kettenabtriebes anzutreiben. Eine solche Hilfsvorrichtung ist beispielsweise eine Zähl- und Kontrollvorrichtung, wie sie in der Schweizer Patentanmeldung Nr. 3231/90 derselben Anmelderin beschrieben ist.

Eine derartige Hilfsvorrichtung wird über ein Kettenrad angetrieben, das im Bereiche der Transportkette derart angeordnet ist, dass seine Zähme mit der Kette im Eingriff stehen und das Rad dadurch von der Kette angetrieben wird. Damit ein derartiges Kettenrad in einer gleichförmigen Drehbewegung angetrieben wird, muss immer mindestens ein Zahn mit der Kette im Eingriff sein. Dies wird erreicht, indem die Kette das Rad um einen minimalen Winkel umschlingt, oder für eine gradlinig verlaufende Kette, indem das Rad ein Minimum von Zähnen oder entsprechend hohe Zähne aufweist.

Ein Kettenrad, das von einer der erwähnten, beispielsweise gradlinig verlaufenden Transportkette gleichförmig angetrieben werden soll, muss bei einer für derartige Ketten üblichen Kettengliedlänge in der Gegend von 100mm einen Durchmesser von ca. 300mm aufweisen. Der Platzbedarf eines derartigen Abtriebrades ist ein offensichtlicher Nachteil.

Die Erfindung stellt sich nun die Aufgabe, einen Kettentrieb zu schaffen, insbesondere einen Kettentrieb für eine Transportkette für den Transport von Druckprodukten, der weniger Platz in Anspruch nimmt als ein entsprechender Kettentrieb gemäss dem Stande der Technik. Der Antrieb soll einen gleichförmigen, schlupffreien Antrieb gewährleisten.

Diese Aufgabe wird gelöst durch den Kettentrieb gemäss dem kennzeichnenden Teil des Patentanspruchs 1.

Für den erfindungsgemässen Kettentrieb werden eine Anzahl k von mehreren miteinander gekoppelten Kettenrädern eingesetzt, die eine geringe Zahnzahl z und eine geringe Zahnhöhe h haben, derart, dass sie zwar einen verhältnismässig kleinen Durchmesser aufweisen, aber nicht in jeder Drehstellung im Eingriff mit einem Kettenbolzen sind. Ein derartiges einzelnes Rad dreht sich von der Kette angetrieben nicht gleichförmig. Die Kettenräder sind nun erfindungsgemäss derart ausgestaltet und angeordnet, dass abwechslungsweise immer ein Zahn eines Rades mit der Kette im Eingriff ist. Da die Räder miteinander gekoppelt sind, drehen sich alle, während rhythmisch abwechselnd immer nur eines angetrieben wird. Über die Achse eines der Kettenräder oder über das Kopplungsmittel kann beispielsweise ein Hilfsvorrichtung angetrieben werden.

Mit dem erfindungsgemässen Kettentrieb können ohne weitere Übersetzung Drehbewegungen erzeugt werden mit verglichen mit der Kettengeschwindigkeit (Kettenglieder pro Zeiteinheit) hohen Drehzahlen. Beispielsweise kann die oben erwähnte Zähl- und Kontrolleinrichtung (CH-Patentanmeldung Nr. 3231/90) mit beispielsweise einem Flügelrad mit 2, 3 oder 4 Flügeln ohne Übersetzung derart angetrieben werden, dass jedes transportierte Druckprodukt von einem Flügel untergriffen wird, was je eine Umdrehung pro 2, 3 oder 4 Kettengliedern bedingt. Dies stellt einen weiteren Vorteil des erfindungsgemässen Kettentriebes dar.

Obschon der erfindungsgemässe Kettentrieb bevorzugt als Abtrieb eingesetzt wird, ist er selbstverständlich auch im Sinne eines Kettenantriebes einsetzbar.

Der erfindungsgemässe Kettentrieb wird nun anhand der folgenden Figuren detailliert beschrieben. Dabei zeigen:

**Figur 1**   Ein Schema einer beispielhaften Ausführungsform des erfindungsgemässen Kettentriebes mit Blickrichtung senkrecht zur Bewegungsrichtung der Kette;

**Figur 2**   eine detaillierte Ansicht einer weiteren beispielhaften Ausführungsform des erfindungsgemässen Kettentriebes mit Blickrichtung senkrecht zur Bewegungsrichtung der Kette;

**Figur 3**   eine Ansicht der Ausführungsform gemäss Figur 2 mit Blickrichtung parallel zur Bewegungsrichtung der Kette.

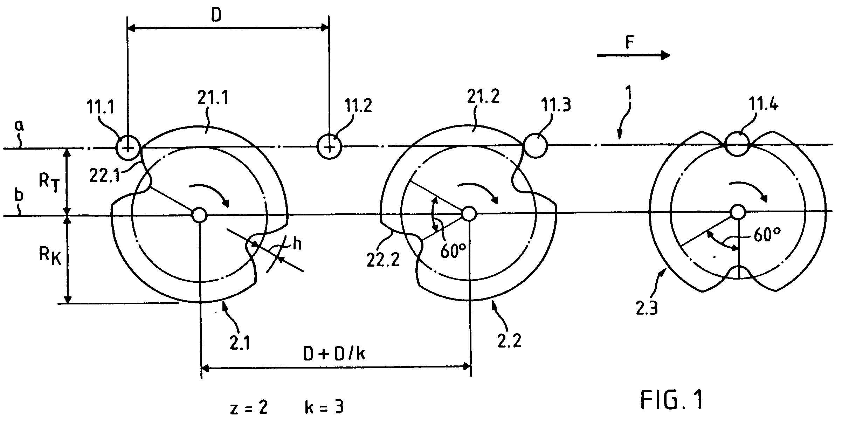

**Figur 1** zeigt schematisch eine beispielhafte Ausführungsform des erfindungsgemässen Kettentriebes. Er weist eine Kette 1 auf in der Bolzen 11.1/2/3/4 mit einem konstanten Abstand D voneinander angeordnet sind. Ferner weist er eine Anzahl k = 3 von Kettenrädern 2.1/2/3 auf, von denen jedes z = 2 Zähne hat. Die Achsen der Räder sind senkrecht zur Bewegungsrichtung F der Kette gerichtet und liegen in einer Ebene b parallel zur Ebene a in der die Bolzenachsen liegen. Der Abstand zwischen der Ebene a der Bolzenachsen und der Ebene b der Kettenradachsen entspricht dem Radius $R_T$ des Teikreises der Kettenräder (Teikreisumfang = $zD$). Der Abstand der Kettenradachsen beträgt $D(n + 1/k)$, wobei $n=0,1,2,3,4...$ eine beliebige ganze Zahl ist. Für die in der Figur 1 dargestellte Variante beträgt der Achsabstand $D + D/k$ ($n = 1$). Die Räder 2.1/2/3 sind derart angeordnet, dass ihre Zähne eine Phasenverschiebung gegeneinander aufweisen. Die Phasenverschiebung beträgt von einem Rad zum anderen 360°/zk. Der Kopfkreisradius $R_K$ der Kettenräder ist derart gewählt, dass der Überdeckungsgrad 1/k beträgt, das heisst, ein Zahn steht im Eingriff mit einem Kettenbolzen während einem Teil einer Umdrehung des Rades, der 360°/zk beträgt. Dies entspricht in der Figur einem Winkel von 60°.

Wird nun die Kette 1 gleichförmig in Richtung des Pfeiles F bewegt, bewegt sich der Bolzen 11.1 entlang der Vorderflanke 22.1 des Zahnes 21.1 des Kettenrades 2.1 und treibt das Rad 2.1 in Pfeilrichtung an. Das Rad 2.1 wird so lang angetrieben, bis der Bolzen 11.1 die Flanke 22.1 abgerollt hat und sich unten in der Lücke zwischen den beiden Zähnen befindet. Das heisst bei einem Kopfkreis, der einen Überdeckungsgrad von 1/k bewirkt, dass dabei der Teilkreis auf der Kettenachse um eine Abrollstrecke D/k abrollt und das Rad um einen Winkel 360°/zk gedreht wird. Da die drei Kettenräder miteinander gekoppelt sind, drehen sich auch die Räder 2.2 und 2.3 um denselben Winkel, angetrieben durch das Kettenrad 2.1. Da das zweite Kettenrad 2.2 derart angeordnet ist, dass seine Zähne mit einer Phasenverschiebung von 360°/zk gegenüber dem ersten Kettenrad 2.1 drehen, beginnt der Bolzen 11.2 seinen Eingriff in die Vorderflanke 22.2 des Zahnes 21.2 des Rades 2.2, wenn alle drei Räder gegenüber der Figur um 60° gedreht wurden und dreht das Rad ebenfalls um 60°. Nach dieser Drehung wird das Rad 2.3 angetrieben, wiederum um 60°.

Da die Räder alle gekoppelt sind, heisst das mit anderen Worten, dass die Kettenräder sich um 180° drehen, wenn die Kette um eine Strecke D bewegt wird. Dies gibt eine Umdrehungszahl U von einer Umdrehung pro zwei Kettengliedern, das heisst U = v/Dz, wobei v die Geschwindigkeit der Kette ist.

Als Kopplungsmittel, das die Drehbewegungen der drei Kettenräder koppelt, kann ein Zahnriemen, eine Kette, ein Zahnradsystem oder ein anderes schlupffreies Kopplungsmittel eingesetzt werden.

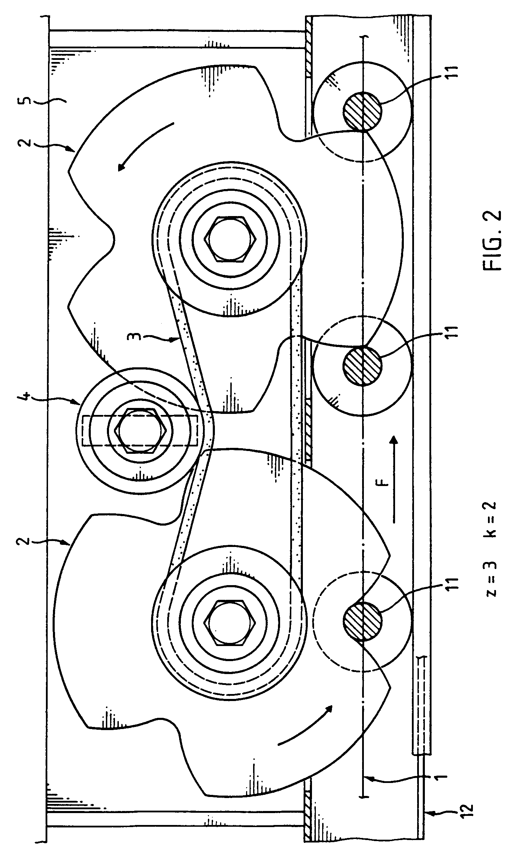

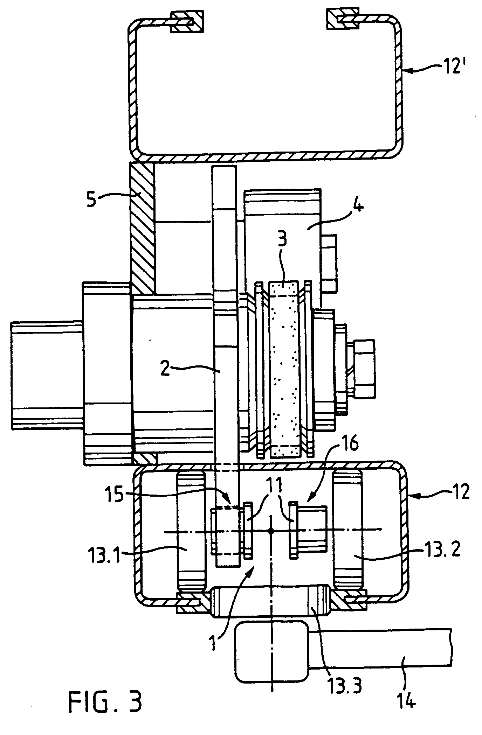

**Figuren 2 und 3** zeigen eine weitere beispielhafte Ausführungsform des erfindungsgemässen Kettentriebes im Detail, und zwar als Ansicht mit Blickwinkel senkrecht zur Bewegungsrichtung der Kette (Figur 2) und als Ansicht mit Blickwinkel parallel zur Bewegungsrichtung der Kette (Figur 3). Der dargestellte Kettentrieb weist zwei Kettenräder (k = 2) mit je drei Zähnen (z = 3) auf. Im Unterschied zu der in dser Figur 1 dargestellten Ausführungsform sind die Kettenräder über der Kette angeordnet.

Die Kette 1 läuft in einem Kanal 12 und weist wiederum Kettenbolzen 11 auf, die mit den Kettenrädern 2 im Eingriff stehen. Die Kettenräder 2 sind miteinander gekoppelt durch einen Zahnriemen 3, der über eine Spannrolle 4 gespannt wird. Kettenräder 2 und Spannrolle 4 sind auf einer Trägerplatte 5 in Lagern gelagert. Diese Trägerplatte 5 kann wie aus der Figur 3 sichtbar zwischen dem Kanal 12 des Vorwärtstrums der Kette und dem Kanal 12' des Rückwärtstrums angeordnet sein, wo die platzsparende Anordnung des gesamten Kettentriebes besonders vorteilhaft ist.

Die in der Figur 3 dargestellt Kette besitzt zwei Laufräder 13.1 und 13.2, die im Kettenkanal 12 abrollen. Die Kettenbolzen 11 bilden die gemeinsamen Achsen von je einem Laufradpaar. Die Kettenbolzen 11 sind mittig in einem Kugelgelenk (nicht dargestellt) gelagert, mit dem auch ein Führungsrad 13.3 verbunden ist, das in einem der Länge des Kanales 12 entlang laufenden Schlitz abrollt. Die Klammer zum Ergreifen eines Druckproduktes (in der Figur nicht sichtbar) ist ausserhalb des Kanales am Arm 14 angeordnet.

Wie aus der Figur 3 ersichtlich ist, können an zwei Stellen 15 und 16 eines Kettenbolzens 11 Kettenräder 2 in Eingriff gebracht werden. Die Bolzen 11 sind an diesen Stellen vorteilhafterweise mit Rollen umgeben. In der in den Figuren 2 und 3 dargestellten Ausführungsform sind die beiden Kettenräder 2 in Bewegungsrichtung der Kette hintereinander und im wesentlichen in derselben Ebene angeordnet. Eine noch mehr platzsparende Version besteht darin, dass die beiden Räder mit einem Achsabstand von nur D/k (n = 0) und gestaffelt nebeneinander angeordnet sind, derart, dass die Zähne des einen Rades mit der Stelle 15 des Kettenbolzens 11, das andere Rad mit der Stelle 16 des Bolzens in Eingriff kommt. Im Falle einer derartigen Ausführungsform ist es besonders vorteilhaft, als Kopplungsmittel Zahnräder einzusetzen.

Die Zähne der dargestellten Kettenräder sind in bezug auf die Flanken symmetrisch ausgestaltet, was den Betrieb der Kette in beiden Richtungen möglich macht. Sollte die Kette immer in derselben Richtung bewegt werden, kann auf die exakte Ausgestaltung der Hinterflanken der Zähne verzichtet werden.

Es versteht sich, dass der erfindungsgemässe Kettentrieb nicht auf die in den Figuren 2 und 3 dargestellten Ketten zum Transport von Druckprodukten beschränkt ist, sondern dass sie an beliebigen Ketten in beliebiger Anwendung in entsprechender Ausführung zur Anwendung kommen können.

Die Kettenräder des erfindungsgemässen Kettentriebes können, wie aus den Figuren 1 bis 3 ersichtlich, über oder unter der Kette angeordnet sein. Sie können auch bei entsprechender Führung der Kette neben der Kette in im wesentlichen waagrechter Stellung oder in irgend einer Stellung im Raume angeordnet sein.

Die Kettenräder des erfindungsgemässen Kettentriebes können auch an nicht geradlinig verlaufenden Stellen von Antriebsketten angeordnet sein. Dies insbesondere bei Ketten, die in einem Kanal verlaufen und deshalb beliebige Kurven durchlaufen können. Die Kettenräder können sowohl in von den Rädern weg gekrümmten (konvexen) Kurven als auch an im gleichen Sinne wie die Räder gekrümmten (konkaven) Kurven angeordnet sein.

**Patentansprüche**

1. Kettentrieb mit einer Kette (1) und mit einer Anzahl (k) von mindestens zwei gleichen Kettenrädern (2), welche Kettenräder je eine Anzahl (z) von Zähnen und quer zur Bewegungsrichtung (F) der Kette (1) liegende Drehachsen aufweisen und welche Kettenräder derart angeordnet und durch ein schlupffreies Kopplungsmittel (3) miteinander gekoppelt sind, dass sie mit der Kette wirkverbunden sind und dass alle mit einer Phasenverschiebung und mit derselben Umdrehungsgeschwindigkeit drehen, mit der eines von ihnen angetrieben wird, **dadurch gekennzeichnet**, dass die Kette (1) in konstanten Abständen (D) voneinander angeordnete Kettenbolzen (11) aufweist, dass der Achsabstand der Kettenräder (2) nD + D/k beträgt, wobei n null oder eine beliebige ganze Zahl ist, dass die Phasenverschiebung zwischen in Förderrichtung (F) aufeinanderfolgenden Kettenrädern 360°/zk beträgt und dass der Kopfkreisradius der Kettenräder (2) derart gewählt ist, dass jeder Zahn eines Kettenrades während eines Bruchteils 1/zk jeder Umdrehung mit der Kette im Eingriff ist.

2. Kettentrieb nach Anspruch 1, **dadurch gekennzeichnet**, dass er zwei Kettenräder (2) mit je drei Zähnen aufweist, die mit einem Achsabstand von 3D/2 entlang der Kette (1) angeordnet sind und in bezug auf ihre Zähne eine Phasenverschiebung von 60° aufweisen, und dass die Zahnhöhe (h) der Zähne der Kettenräder (2) derart ausgelegt ist, dass sich ein Überdekungsgrad von 0,5 ergibt.

3. Kettentrieb nach Anspruch 1 oder 2, **dadurch gekennzeichnet**, dass die Zähne der Kettenräder im bezug auf ihre Flanken symmetrisch ausgebildet sind.

4. Kettentrieb nach einem der Ansprüche 1 bis 3, **dadurch gekennzeichnet**, dass die Kettenräder im wesentlichen in einer Ebene angeordnet sind und der Abstand zwischen den Kettenradachsen grösser ist als der Kopfkreisdurchmesser ($R_K$) der Kettenräder.

5. Kettentrieb nach einem der Ansprüche 1 bis 3, **dadurch gekennzeichnet**, dass die Kettenräder in Bewegungsrichtung der Kette gestaffelt nebeneinander angeordnet sind und der Abstand zwischen den Kettenradachsen kleiner ist als der Kopfkreisdurchmesser ($R_K$) der Kettenräder.

6. Kettentrieb nach einem der vorgehenden Ansprüche, **dadurch gekennzeichnet**, dass die Kettenräder mit einem Zahnriemen (3), Zahnrädern oder einer Kette miteinander gekoppelt sind.

7. Kettentrieb nach Anspruch 6, **dadurch gekennzeichnet**, dass der Zahnriemen (3) oder die Kette zwischen zwei Antriebsrädern durch eine Spannrolle (4) gespannt wird.

8. Kettentrieb nach einem der vorangehenden Ansprüche, **dadurch gekennzeichnet**, dass die Kette (1) in einem Kanal (12) bewegt wird und dass die Kettenräder (2) auf einer Trägerplatte (5) drehbar gelagert sind, wobei die Trägerplatte (5) zwischen dem Kanal (12) des Vorwärtstrums und dem Kanal (12') des Rückwärtstrums befestigt ist.

9. Verwendung eines Kettentriebes gemäss einem der Ansprüche 1 bis 8 an einer Transportkette für Druckprodukte für den Antrieb einer Zähl- oder Kontrollvorrichtung, die mit jedem transportierten Druckprodukt in Interaktion tritt.

**Claims**

1. Chain drive with a chain (1) and with a number (k) of at least two identical sprocket wheels (2), said sprocket wheels in each case having a number (z) of teeth and rotation axes at right angles to the movement direction (F) of the chain (1) and said sprocket wheels are so arranged and coupled together by a slip-free coupling means (3) that they are operatively connected to the chain and that all rotate with a phase shift and with the same rotational speed as one of them is driven, characterized in that the chain (1) has link pins (11) arranged with constant reciprocal spacings (D), that the centre distance of the sprocket wheels (2) is nD + D/k, in which n is zero or a random integer, that the phase shift between the sprocket wheels succeeding one another in the conveying direction (F) is 360°/zk and that the addendum radius of the sprocket wheels (2) is chosen in such a way that each tooth of a sprocket wheel is in engagement with the chain during a fraction 1/zk of each revolution.

2. Chain wheel according to claim 1, characterized in that it has two sprocket wheels (2) with in each case three teeth arranged with a centre distance of 3D/2 along the chain (1) and having a phase shift of 60° with respect to their teeth and that the tooth height (h) of the teeth of the sprocket wheels (2) is such that there is an engagement factor of 0.5.

3. Chain drive according to claim 1 or 2, characterized in that the teeth of the sprocket wheels are constructed symmetrically with respect to their edges.

4. Chain drive according to one of the claims 1 to 3, characterized in that the sprocket wheels are located substantially in one plane and the distance between the sprocket wheel axes is greater than the addendum diameter ($R_K$) of the sprocket wheels.

5. Chain drive according to one of the claims 1 to 3, characterized in that the sprocket wheels are juxtaposed in staggered manner in the chain movement direction and the distance between the sprocket wheel axes is smaller than the addendum diameter ($R_K$) of the sprocket wheels.

6. Chain drive according to one of the preceding claims, characterized in that the chain wheels are coupled together by a toothed belt (3), gear wheels or a chain.

7. Chain drive according to claim 6, characterized in that the toothed belt (3) or the chain is stretched by an idler (4) between two driving wheels.

8. Chain drive according to one of the preceding claims, characterized in that the chain (1) is moved in a channel (12) and that the sprocket wheels (2) are mounted in rotary manner on a support plate (5), which is fixed between the channel (12) of the forward strand and the channel (12') of the backward strand.

9. Use of a chain drive according to one of the claims 1 to 8 on a printed product conveying chain for driving a counting or control device, which interacts with each conveyed printed product.

**Revendications**

1. Entraînement à chaîne comprenant une chaîne (1) et des roues à chaîne identiques (2), en un nombre (k) d'au moins deux, lesquelles roues à chaîne présentent chacune un nombre (z) de dents et des axes de rotation disposés transversalement à la direction (F) du mouvement de la chaîne (1), et lesquelles roues à chaîne sont agencées et accouplées entre elles par un moyen d'accouplement (3) sans glissement, de telle manière qu'elles soient liées à la chaîne et que toutes ces roues tournent avec un décalage de phase et à la même vitesse de rotation, qui est celle avec laquelle l'une d'entre elles est entraînée, caractérisé en ce que la chaîne (1) présente des axes de chaîne (11) disposés à des écartements mutuels (D) constants, en ce que l'écartement entre les axes des roues à chaîne (2) équivaut à nD + D/k, où $\underline{n}$ est zéro ou un nombre entier quelconque, en ce que le décalage de phase entre des roues à chaîne qui se suivent dans la direction du transport (F) est de 360°/zk et en ce que le rayon du cercle de tête des roues à chaîne (2) est choisi de manière que chaque dent d'une roue a chaîne soit en prise avec la chaîne pendant une fraction 1/zk de chaque tour.

2. Entraînement à chaîne selon la revendication 1, caractérisé en ce qu'il comprend deux roues à chaîne (2) ayant chacune trois dents, qui sont disposées le long de la chaîne (1) avec un écartement entre axes de 3D/2 et présentent en ce qui concerne leurs dents un décalage de phase de 60°, et en ce que la hauteur (h) des dents des roues à chaîne (2) est calculée de manière à réaliser un degré de recouvrement de 0,5.

3. Entraînement à chaîne selon la revendication 1 ou 2, caractérisé en ce que les dents des roues à chaîne sont de constitution symétrique en ce qui concerne leur flancs.

4. Entraînement à chaîne selon une des revendications 1 à 3, caractérisé en ce que les roues à chaîne sont disposées sensiblement dans un même plan et la distance d'écartement entre les axes des roues est supérieure au diamètre du cercle de tête ($R_K$) des roues à chaîne.

5. Entraînement à chaîne selon une des revendications 1 à 3, caractérisé en ce que les roues à chaîne sont disposées les unes à côté des autres dans la direction du mouvement de la chaîne dans des plans décalés et la distance d'écartement entre axes des roues à chaîne est inférieure au diamètre du cercle de tête ($R_K$) des roues à chaîne.

6. Entraînement à chaîne selon une des revendications précédentes, caractérisé en ce que les roues à chaîne sont accouplées entre elles au moyen d'une courroie crantée (3), de roues dentées ou d'une chaîne.

7. Entraînement à chaîne selon la revendication 6, caractérisé en ce que la courroie crantée (3) ou la chaîne est tendue entre deux roues d'entraînement par un galet tendeur (4).

8. Entraînement à chaîne selon une des revendications précédentes, caractérisé en ce que la chaîne (1) circule dans une gouttière (12) et en ce que les roues à chaîne (2) sont montées rotatives sur une plaque porteuse (5), la plaque porteuse (5) étant fixée entre la gouttière (12) du brin en marche avant et la gouttière (12') du brin en marche arrière.

9. Utilisation d'un entraînement à chaîne selon une des revendications 1 à 8 dans une chaîne transporteuse pour imprimés, pour l'entraînement d'un dispositif de comptage et de commande qui entre en interaction avec chaque produit imprimé transporté.

FIG. 1

z = 3   k = 2

FIG. 2

EP 0 540 866 B1

FIG. 3